# EUROPÄISCHE PATENTSCHRIFT

(11) **EP 2 729 686 B1**
(45) Veröffentlichungstag und Bekanntmachung des Hinweises auf die Patenterteilung: **24.06.2015**
(21) Anmeldenummer: 12746311.5
(22) Anmeldetag: 02.08.2012
(51) Int. Cl.: F01D 3/04, F01D 3/02, F01D 25/26, F02C 7/141

(54) **KÜHLUNG FÜR EINE STRÖMUNGSMASCHINE**
COOLING FOR A FLUID FLOW MACHINE
REFROIDISSEMENT POUR UNE TURBOMACHINE

(30) Priorität: 30.08.2011 EP 11179311
(43) Veröffentlichungstag der Anmeldung: 14.05.2014
(73) Patentinhaber: Siemens Aktiengesellschaft, 80333 München (DE)
(72) Erfinder: KÄSTNER, Christoph, 46117 Oberhausen (DE); PÖTTER, Rudolf, 45355 Essen (DE)
(86) Internationale Anmeldenummer: PCT/EP2012/065103
(87) Internationale Veröffentlichungsnummer: WO 2013/029911

(56) Entgegenhaltungen:
- EP-A1- 0 394 894
- EP-A1- 1 806 476
- EP-A2- 1 536 102
- WO-A2-2010/045664
- US-A- 2 796 231
- US-A- 2 823 891
- US-A- 3 614 255
- US-A- 5 953 900

## Beschreibung

Die Erfindung betrifft eine Strömungsmaschine, gemäß Anspruch 1, umfassend einen um eine Rotationsachse drehbar gelagerten Rotor, ein Innengehäuse, das um den Rotor angeordnet ist, ein Außengehäuse, das um das Innengehäuse angeordnet ist, wobei zwischen dem Rotor und dem Innengehäuse ein erster Strömungsbereich und ein zum ersten Strömungsbereich in entgegengesetzter Strömungsrichtung ausgebildeter zweiter Strömungsbereich angeordnet ist, wobei der Rotor einen Schubausgleichskolben aufweist, wobei eine Kolbenausgleichsleitung zum Zuführen von Dampf zwischen Innengehäuse und Schubausgleichskolben ausgebildet ist.

In Strömungsmaschinen, wie beispielsweise Dampfturbinen, wird ein heißer Frischdampf mit einer vergleichsweise hohen thermischen Energie in Rotationsenergie eines Rotors umgewandelt. Dies erfolgt in einem Strömungskanal der durch Leit- und Laufschaufeln gebildet wird. Heutige Dampfturbinen weisen Dampftemperaturen von über 600°C auf. Solch hohe Temperaturen stellen erhöhte Anforderungen an die zu verwendenden Materialien auf. Eine Dampfturbine umfasst im Wesentlichen einen drehbar gelagerten Rotor, ein um den Rotor angeordnetes Innengehäuse sowie ein um das Innengehäuse angeordnetes Außengehäuse auf. Die Temperaturverteilung auf diesen drei Bauteilen ist sehr unterschiedlich. So wird der Frischdampfeinströmbereich thermisch besonders stark belastet, wohingegen die Bereiche, in denen die thermische Energie des Dampfes bereits größtenteils in Rotationsenergie umgewandelt ist und dadurch die Temperatur geringer geworden ist, weniger stark belastet sind.

Es sind Ausführungsformen von Dampfturbinen bekannt, die lediglich einen Strömungskanal zwischen dem Rotor und dem Innengehäuse aufweisen. Solche Dampfturbinen werden herkömmlich als einflutige Dampfturbinen bezeichnet. Es sind Ausführungsformen von Dampfturbinen bekannt, die zwei Strömungskanäle in einem Außengehäuse aufweisen. In der Regel werden solche Dampfturbinen mit einem Innengehäuse ausgeführt. Die Strömungsrichtungen der Strömungskanäle können dabei in entgegengesetzter Richtung (reverse flow) oder in einer einheitlichen Richtung (straight flow) ausgebildet sein.

Im Betrieb erfährt der Rotor infolge des Dampfdrucks einen Schub in eine Richtung. Dieser Schubkraft muss entgegengewirkt werden, was durch die Berücksichtigung eines Schubausgleichskolbens erfolgt, der an einer vorbestimmten Stelle mit einem Dampf beaufschlagt wird und somit eine entgegengesetzte Kraft zur Schubkraft ausübt.

Es ist bekannt, dass der Dampf aus dem Einströmbereich des zweiten Strömungskanals über eine Kolbenausgleichsleitung entnommen wird und im Bereich des Schubausgleichskolbens zugeführt wird. Dies führt allerdings dazu, dass der heiße Dampf aus dem zweiten Strömungsbereich teilweise über den Schubausgleichskolben geleitet wird und dadurch auf das Außengehäuse trifft. Dadurch wird das Außengehäuse an dieser Stelle thermisch stark belastet. Ein Standardwerkstoff könnte für das Außengehäuse an dieser Stelle nicht eingesetzt werden. Es müssten daher teurere Werkstoffe an dieser Stelle, wie z.B. GGGSIMO eingesetzt werden. Solche Werkstoffe sind in der Regel vergleichsweise teuer und lassen sich darüber hinaus schlecht gießen, was zu Materialfehlern führt.

Die Erfindung hat es sich daher zur Aufgabe gemacht, dies zu verhindern.

Diese Aufgabe wird gelöst durch eine Strömungsmaschine umfassend einen um eine Rotationsachse drehbar gelagerten Rotor, ein Innengehäuse, das um den Rotor angeordnet ist, ein Außengehäuse, das um das Innengehäuse angeordnet ist, wobei zwischen dem Rotor und dem Innengehäuse ein erster Strömungsbereich und ein zum ersten Strömungsbereich in entgegengesetzter Strömungsrichtung ausgebildeter zweiter Strömungsbereich angeordnet ist, wobei der Rotor einen Schubausgleichskolben aufweist, wobei eine Kolbenausgleichsleitung zum Zuführen von Dampf zwischen Innengehäuse und Schubausgleichskolben ausgebildet ist, wobei die Kolbenausgleichsleitungsoberfläche gegenüber einer Rohrleitungsoberfläche vergrößert ausgeführt ist und/oder die Kolbenausgleichsleitungsinnenfläche gegenüber einer Rohrleitungsinnenfläche vergrößert ausgeführt ist.

Ein wesentlicher Gedanke der Erfindung ist es daher, dem heißen Dampf, der aus dem zweiten Strömungskanal kommt und über die Kolbenausgleichsleitung geführt wird, Energie zu entziehen. Dies geschieht erfindungsgemäß derart, dass die Kolbenausgleichsleitungsoberfläche bei einer mit gleichem Durchmesser ausgeführten Rohrleitung vergrößert ausgeführt wird. Das bedeutet, dass durch die vergrößerte Oberfläche der Kolbenausgleichsleitung ein verbesserter Wärmeaustausch mit der Umgebung stattfinden kann, wodurch sich die Temperatur des in der Kolbenausgleichsleitung befindlichen Dampfes verringern kann. Ebenso wird die Kolbenausgleichsleitungsinnenfläche der Kolbenausgleichsleitung derart ausgeführt, dass diese vergrößert ist gegenüber einer herkömmlichen Rohrleitungsinnenfläche, die bekanntermaßen glatt ausgeführt ist. Durch diese vergrößerte Oberfläche findet auch hier eine verbesserte thermische Wechselwirkung statt zwischen dem in der Kolbenausgleichsleitung befindlichen Dampf und der Kolbenausgleichsleitung.

In den Unteransprüchen sind vorteilhafte Weiterbildungen angegeben.

In einer ersten vorteilhaften Weiterbildung sind an der Kolbenausgleichsleitungsoberfläche Außenkühlrippen angeordnet. Durch die Ausführung mit Kühlrippen, wobei möglichst viele Kühlrippen verwendet werden sollen, ist ein hervorragender thermischer Ausgleich möglich. Dabei gilt es auch zu berücksichtigen, dass, je größer die Oberfläche dieser Außenkühlrippen ausgebildet wird, eine verbesserte thermische Wechselwirkung stattfindet.

In einer weiteren vorteilhaften Weiterbildung werden die Außenkühlrippen in Kolbenausgleichsleitungsrichtung nacheinander angeordnet. Auch hierbei gilt, dass, je mehr Außenkühlrippen angeordnet werden, eine bessere thermische Wechselwirkung stattfindet. Vorteilhafterweise werden die Außenkühlrippen als in radialer Richtung zur Kolbenausgleichsleitungsrichtung sich erstreckende Scheibenringe ausgebildet. Scheibenringe zeichnen sich durch zwei parallel zueinander angeordnete Oberflächen aus und sind dadurch leicht herzustellen. In vorteilhafter Weiterbildung werden die Scheibenringe in äquidistanten Abständen zueinander angeordnet.

Der thermische Ausgleich findet dadurch homogen statt und außerdem lässt sich solch eine Kolbenausgleichsleitung leichter und günstiger ausführen.

In einer weiteren vorteilhaften Weiterbildung sind an der Kolbenausgleichsleitungsinnenfläche Innenkühlrippen angeordnet. Diese Innenkühlrippen sind in Innenumfangsrichtung nacheinander angeordnet und derart ausgeführt, dass sie die Strömungseigenschaften des in der Kolbenausgleichsleitung strömenden Dampfes nicht wesentlich beeinflussen. Daher sind diese Innenkühlrippen als in längliche Richtung oder um die längliche Richtung gedrallte ausgebildete Platten, Vorsprünge oder Scheiben ausgeführt, die in einer Innenumfangsrichtung in äquidistanten Abständen zueinander angeordnet sind. Hier ist ebenso der Gedanke wichtig, dass, je mehr Oberfläche geschaffen wird mittels der Innenkühlrippen, eine verbesserte thermische Ausgleichswirkung zwischen dem in der Kolbenausgleichsleitung strömenden Dampfes und der Kolbenausgleichsleitung selbst stattfindet.

Die Erfindung wird anhand eines Ausführungsbeispiels nun näher erläutert. Gleichlautende Bezugszeichen haben im Wesentlichen die gleiche Funktionsweise.

Es zeigen:
- FIG 1: die Querschnittsansicht einer Dampfturbine,
- FIG 2: eine perspektivische Ansicht einer Kolbenausgleichsleitung.

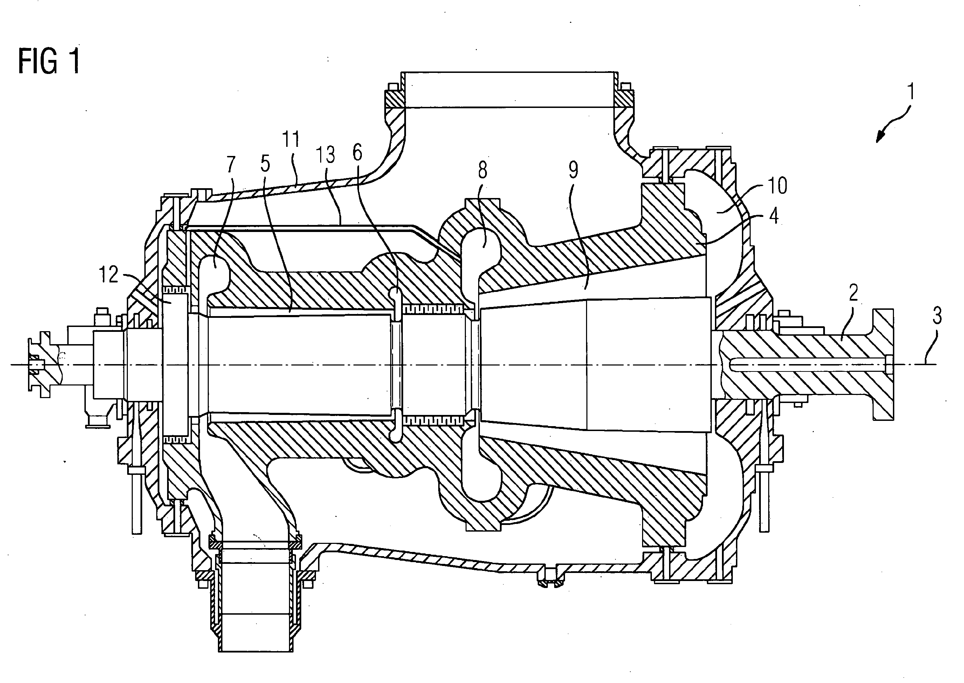

Die FIG 1 zeigt eine Dampfturbine 1 als Ausführungsform einer Strömungsmaschine. Die Dampfturbine 1 umfasst im Wesentlichen einen Rotor 2, der um eine Rotationsachse 3 drehbar gelagert ist. Um den Rotor 2 ist ein Innengehäuse 4 angeordnet, wobei zwischen dem Innengehäuse 4 und dem Rotor 2 ein erster Strömungskanal 5 ausgebildet ist, der auch als Hochdruck-Strömungsbereich bezeichnet werden kann. Die Strömungsrichtung des ersten Strömungskanals 5 zeigt in der Darstellung gemäß FIG 1 nach links. Im Betrieb strömt ein Dampf über einen HD-Frischdampfbereich 6 durch das Innengehäuse 4 in den ersten Strömungskanal 5. Der im ersten Strömungskanal 5 über den Hochdruck-Frischdampfbereich 6 einströmende Dampf kühlt sich in Strömungsrichtung ab und kommt über einen HD-Ausströmbereich 7 aus der Dampfturbine 1 und wird nach einer Zwischenüberhitzerstufe wieder über einen MD-Einströmbereich 8 in die Dampfturbine einem zweiten Strömungskanal 9 zugeführt. Schließlich strömt der Dampf über den Mitteldruck-Ausströmbereich 10 aus der Dampfturbine 1 heraus. Um das Innengehäuse 4 ist ein Außengehäuse 11 angeordnet.

Der Rotor 2 ist am Ende des ersten Strömungskanals 5 mit einem Schubausgleichskolben 12 ausgebildet.

Im Betrieb wird über eine Kolbenausgleichsleitung 13 eine strömungstechnische Verbindung zwischen dem MD-Einströmbereich 8 und dem Bereich des Schubausgleichskolbens 12 hergestellt. Dieser aus dem zweiten Einströmbereich 8 kommende Dampf ist ein vergleichsweise heißer Dampf und wird zwischen dem Schubausgleichskolben 12 und dem Innengehäuse 4 geführt. Allerdings kommt es hierbei vor, dass ein Teil dieses vergleichsweise heißen Dampfes zwischen dem Schubausgleichskolben 12 und dem Innengehäuse 4 strömt und auf das Außengehäuse 11 an dieser Stelle strömt. Dadurch wird das Außengehäuse 11 an dieser Stelle thermisch besonders stark belastet.

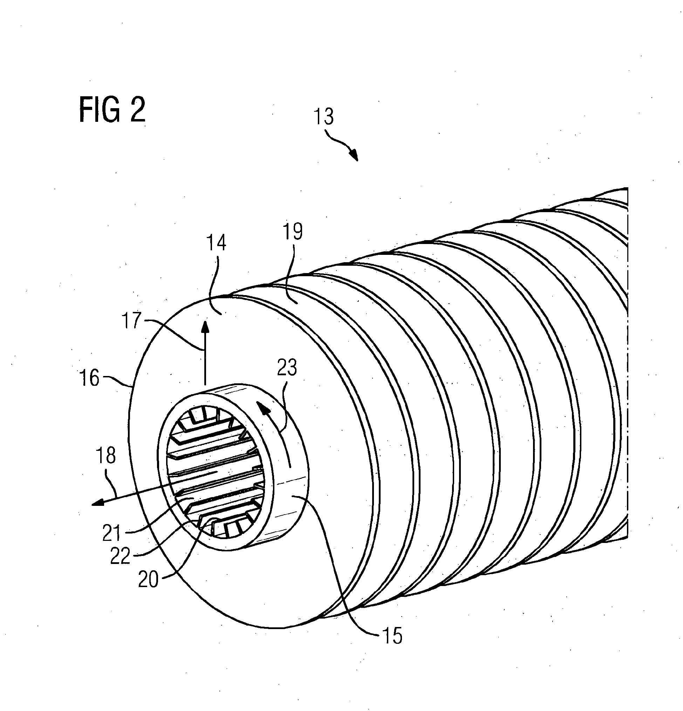

Die Kolbenausgleichsleitung 13 wird daher gemäß FIG 2 erfindungsgemäß ausgebildet. Grundsätzlich wird die Kolbenausgleichsleitung 13 derart ausgeführt, dass die Kolbenausgleichsleitungsoberfläche 14 gegenüber einer Rohrleitungsoberfläche vergrößert ausgeführt ist. Dazu wird, wie in FIG 2 dargestellt, eine Rohrleitungsoberfläche 15 mit Außenkühlrippen 16 (in FIG 2 ist lediglich die erste Außenkühlrippe mit einem Bezugszeichen versehen) ausgebildet. Die Außenkühlrippen 16 sind dabei als Scheibenringe ausgeführt, die sich in einer radialen Richtung 17 erstrecken. Die radiale Richtung 17 ist hierbei im Wesentlichen senkrecht zur Kolbenausgleichsleitungsrichtung 18 ausgebildet. Die Außenkühlrippen 16 sind hierbei in der Kolbenausgleichsrichtung 18 nacheinander angeordnet. Besonders vorteilhaft werden Außenkühlrippen 16 in der Kolbenausgleichsrichtung in äquidistanten Abständen angeordnet. Die Außenkühlrippen 16 werden dabei derart ausgeführt, dass an der Kolbenausgleichsleitungsoberfläche 19 eine möglichst große Oberfläche entsteht.

Die Kolbenausgleichsleitungsinnenoberfläche 20 wird hierbei gegenüber einer Rohrleitungsinnenfläche 21 vergrößert ausgeführt. Dazu wird die Kolbenausgleichsleitungsinnenfläche mit Innenkühlrippen 22 ausgebildet, die in einer Innenumfangsrichtung in äquidistanten Abständen ausgeführt sind. Die Innenkühlrippen 22 sind als in radialer Richtung 17 sich erstreckende Vorsprünge ausgebildet, die sozusagen als Scheiben oder Längsrippen oder um die Strömungsrichtung 18 gedrallte Rippen ausgeführt sind. In FIG 2 ist lediglich eine Kühlrippe 22 mit einem Bezugszeichen versehen. Die Innenkühlrippen 22 erstrecken sich dabei in der Kolbenausgleichsrichtung 18 und stellen somit einen guten thermischen Kontakt zwischen dem in der Kolbenausgleichsleitung 13 befindlichen Dampf und der Kolbenausgleichsleitung 13 selbst her.

Durch diese erfindungsgemäße Gestaltung der Kolbenausgleichsleitung 13 ist es möglich, die Temperatur des in der Kolbenausgleichsleitung 13 befindlichen Dampfes zu reduzieren.

## Patentansprüche

1. Strömungsmaschine
umfassend einen um eine Rotationsachse (3) drehbar gelagerten Rotor (2), ein Innengehäuse (4), das um den Rotor (2) angeordnet ist, ein Außengehäuse(11), das um das Innengehäuse (4) angeordnet ist,
wobei zwischen dem Rotor (2) und dem Innengehäuse (4) ein erster Strömungsbereich und ein zum ersten Strömungsbereich in entgegengesetzter Strömungsrichtung ausgebildeter zweiten Strömungsbereich angeordnet ist,
wobei der Rotor (2) einen Schubausgleichskolben (12) aufweist,
wobei eine Kolbenausgleichsleitung (13) zum Zuführen von Dampf zwischen Innengehäuse (4) und Schubausgleichskolben (12) ausgebildet ist,
wobei
die Kolbenausgleichsleitungsoberfläche (KAO) gegenüber einer Rohrleitungsoberfläche vergrößert ausgeführt ist und/oder die Kolbenausgleichsleitungsinnenfläche (KAI) gegenüber einer Rohrleitungsinnenfläche (21) vergrößert ausgeführt ist, **dadurch gekennzeichnet dass** auf der Kolbenausgleichsleitungsoberfläche (KAO) Außenkühlrippen (AKR) angeordnet sind,
wobei die Außenkühlrippen (AKR) in Kolbenausgleichsleitungsrichtung (18) nacheinander angeordnet sind.

2. Strömungsmaschine nach Anspruch 1,
wobei die Außenkühlrippen (AKR) als in radialer Richtung zur Kolbenausgleichsleitungsrichtung (18) sich erstreckende Scheibenringe ausgebildet sind.

3. Strömungsmaschine nach Anspruch 2,
wobei die Scheibenringe in äquidistanten Abständen zueinander angeordnet sind.

4. Strömungsmaschine nach Anspruch 1,
wobei an der Kolbenausgleichsleitungsinnenfläche (KAI) Innenkühlrippen (IKR) angeordnet sind.

5. Strömungsmaschine nach Anspruch 4,
wobei die Innenkühlrippen (IKR) in Innenumfangsrichtung (23) nacheinander angeordnet sind.

6. Strömungsmaschine nach Anspruch 5,
wobei die Innenkühlrippen (IKR) als in axialer Richtung zur Kolbenausgleichleitungsrichtung oder um die axiale Richtung gedrallte erstreckende Vorsprünge ausgeführt sind.

7. Strömungsmaschine nach Anspruch 6,
wobei die Vorsprünge als Scheiben ausgeführt sind.

8. Strömungsmaschine nach Anspruch 5, 6 oder 7,
wobei die Innenkühlrippen (IKR) in Innenumfangsrichtung in äquidistanten Abständen zueinander angeordnet sind.

## Claims

1. Turbomachine
comprising a rotor (2) mounted rotatably about an axis of rotation (3), an inner housing (4) arranged about the rotor (2) and an outer housing (11) arranged about the inner housing (4),
wherein a first flow region and a second flow region, formed in the opposite flow direction to the first flow region, are arranged between the rotor (2) and the inner housing (4), wherein the rotor (2) has a thrust-equalizing piston (12), wherein a piston-equalizing line (13) is formed for introducing steam between the inner housing (4) and the thrust-equalizing piston (12),
wherein the piston-equalizing line outer surface (KAO) is embodied enlarged with respect to a pipe outer surface and/or the piston-equalizing line inner surface (KAI) is embodied enlarged with respect to a pipe inner surface (21), **characterized in that**
outer cooling ribs (AKR) are arranged on the piston-equalizing line outer surface (KAO),
wherein the outer cooling ribs (AKR) are arranged in series in the direction (18) of the piston-equalizing line.

2. Turbomachine according to Claim 1,
wherein the outer cooling ribs (AKR) are formed as annular disks extending in the radial direction with respect to the direction (18) of the piston-equalizing line.

3. Turbomachine according to Claim 2,
wherein the annular disks are arranged at regular intervals.

4. Turbomachine according to Claim 1,
wherein inner cooling ribs (IKR) are arranged on the piston-equalizing line inner surface (KAI).

5. Turbomachine according to Claim 4,
wherein the inner cooling ribs (IKR) are arranged in series in the inner circumferential direction (23).

6. Turbomachine according to Claim 5,
wherein the inner cooling ribs (IKR) are embodied as projections extending in the axial direction with respect to the direction of the piston-equalizing line or twisted about the axial direction.

7. Turbomachine according to Claim 6,
wherein the projections are embodied as disks.

8. Turbomachine according to Claim 5, 6 or 7,
wherein the inner cooling ribs (IKR) are arranged at regular intervals in the inner circumferential direction.

## Revendications

1. Turbomachine
comprenant un rotor (2) monté tournant autour d'un axe (3) de rotation, une enveloppe (4) intérieure qui est disposée autour du rotor (2), une enveloppe (11) extérieure qui est disposée autour de l'enveloppe (4) intérieure,
dans laquelle il est disposé, entre le rotor (2) et l'enveloppe (4) intérieure, une première zone d'écoulement et une deuxième zone d'écoulement constituée, par rapport à la première zone d'écoulement, dans le sens contraire d'écoulement,
dans laquelle le rotor (2) a un piston (12) de compensation de la poussée,
dans laquelle un conduit (13) de compensation du piston est constitué pour apporter de la vapeur entre l'enveloppe (4) intérieure et le piston (12) de compensation de la poussée, dans laquelle
la surface (KAO) du conduit de compensation du piston est réalisée de manière agrandie par rapport à une surface de conduit tubulaire et/ou la surface (KAI) intérieure de conduit de compensation du piston est réalisée de manière agrandie par rapport à une surface intérieure de conduit tubulaire,
**caractérisée en ce que**
des ailettes (AKR) extérieures de refroidissement sont disposées sur la surface (KAO) de conduit de compensation du piston,
dans laquelle les ailettes (AKR) extérieures de refroidissement sont disposées les unes à côté des autres dans la direction (18) du conduit de compensation du piston.

2. Turbomachine suivant la revendication 1,
dans laquelle les ailettes (AKR) extérieures de refroidissement sont constituées sous la forme de disques annulaires s'étendant dans la direction radiale par rapport à la direction (18) du conduit de compensation du piston.

3. Turbomachine suivant la revendication 2,
dans laquelle les disques annulaires sont disposés à des distances équidistantes les uns des autres.

4. Turbomachine suivant la revendication 1,
dans laquelle des ailettes (IKR) intérieures de refroidissement sont disposées sur la surface (KAI) intérieure du conduit de compensation du piston.

5. Turbomachine suivant la revendication 4,
dans laquelle les ailettes (IKR) intérieures de refroidissement sont disposées les unes à côté des autres dans la direction (23) périphérique intérieure.

6. Turbomachine suivant la revendication 5,
dans laquelle les ailettes (IKR) intérieures de refroidissement sont réalisées sous la forme de saillies s'étendant dans la direction axiale par rapport à la direction du conduit de compensation du piston ou s'étendant hélicoïdalement autour de la direction axiale.

7. Turbomachine suivant la revendication 6,
dans laquelle les saillies sont réalisées sous la forme de disques.

8. Turbomachine suivant la revendication 5, 6 ou 7,
dans laquelle les ailettes (IKR) intérieures de refroidissement sont disposées dans la direction périphérique intérieure en étant à des distances équidistantes les unes des autres.
